# EUROPEAN PATENT SPECIFICATION

(11) **EP 3 759 334 B1**
(45) Date of publication and mention of the grant of the patent: **19.01.2022**
(21) Application number: 19721013.1
(22) Date of filing: 26.02.2019
(51) Int. Cl.: F02M 23/08, F02M 23/03

(54) **FUEL SUPPLY SYSTEM WITH IMPROVED CARBURETOR FOR INTERNAL COMBUSTION ENGINE, INTERNAL COMBUSTION ENGINE AND RELATED MOTOR VEHICLE**
KRAFTSTOFFVERSORGUNGSSYSTEM MIT VERBESSERTEM VERGASER FÜR VERBRENNUNGSMOTOREN, VERBRENNUNGSMOTOR UND ZUGEHÖRIGES KRAFTFAHRZEUG
SYSTÈME D'ALIMENTATION EN CARBURANT DOTÉ D'UN CARBURATEUR AMÉLIORÉ POUR MOTEUR À COMBUSTION INTERNE, MOTEUR À COMBUSTION INTERNE ET VÉHICULE À MOTEUR ASSOCIÉ

(30) Priority: 28.02.2018 IT 201800003141
(43) Date of publication of application: 06.01.2021
(73) Proprietor: Piaggio & C. S.P.A., 56025 Pontedera Pisa (IT)
(72) Inventor: BIANCONI, Dante, 56025 Pontedera, Pisa (IT); COSTA, Gianni, 56025 Pontedera, Pisa (IT)
(74) Representative: Mitola, Marco
(86) International application number: PCT/IB2019/051519
(87) International publication number: WO 2019/166939

(56) References cited:
- JP-U- S54 137 619
- JP-U- S59 150 968
- US-A- 2 169 622
- US-A1- 2014 026 854

## Description

### FIELD OF APPLICATION

The present invention relates to a fuel supply system with improved carburetor for internal combustion engine, an internal combustion engine comprising said fuel supply system and a related motor vehicle.

### BACKGROUND ART

As is known, whether they are two- or four-stroke, internal combustion engines with a carburetor are difficult to fine-tune and suffer the problem of polluting emissions despite the use of catalyzers and specific spark advance mapping.

The polluting emissions are particularly high in two-stroke engines, in particular in the ones without an efficient combustion chamber (quiescent combustion chamber), i.e. without the "squish" area and which cannot use a cut-off system, the oil being suspended with the oxidizing air.

The polluting emissions, which essentially are due to unburnt oil and hydrocarbons, are particularly high in the release steps of the accelerator. Indeed under these conditions, due to the absence of the cut-off valve, the carburetor allows the suction of fuel, drawn by the depression generated by the pistons, which is mixed together with the lubricating oil.

Therefore, an oil and fuel suspension is created in an environment substantially lacking in or having little oxidizer (i.e. air), which suspension is ejected through the engine exhausts, thus significantly increasing the polluting emissions.

Moreover, over time the unburnt hydrocarbons and the oil tend to dirty the catalyzer devices normally used upstream of the exhausts, thus affecting or compromising the operation thereof and further increasing the polluting emissions of the engine under all operating conditions.

As seen, such a phenomenon particularly occurs in the release step of the gasoline control, given that by abruptly closing, the throttle valve of the carburetor creates a strong depression which draws an increased quantity of unburnt fuel and oil into the combustion chamber.

To date, these drawbacks have substantially been solved by means of switching from carburetor supply to the one of electronic injection, which allows a quick and effective cut off to be carried out under the release conditions of the gasoline.

However, such a solution is an increase of the overall costs due to switching to the significantly more complex injection supply.

### PRESENTATION OF THE INVENTION

The need is therefore felt to solve the drawbacks and limitations mentioned in reference to the prior art, without needing to switch from carburetor to injection supply, so as to limit the costs and the construction complexity of the fuel supply system of the engine.

Such a need is met by a fuel supply system for internal combustion engine according to claim 1, by an internal combustion engine according to claim 14, and by a motor vehicle according to claim 15.

### DESCRIPTION OF THE DRAWINGS

Further features and advantages of the present invention will become more comprehensible from the following description of preferred and non-limiting embodiments thereof, in which:
Figure 1 shows a diagrammatic view of a fuel supply system for internal combustion engine according to a first embodiment of the present invention.
Figure 2 shows a diagrammatic view of a fuel supply system for internal combustion engine according to a second embodiment of the present invention.

The elements or parts of elements common to the embodiments described below will be indicated using the same numerals.

### DETAILED DESCRIPTION

With reference to the aforesaid drawings, an overall diagrammatic view of a fuel supply system for internal combustion engine 8 according to the present invention, is indicated as a whole with 4.

For the purposes of the present invention, it is worth noting that the term internal combustion engine is to be considered in a broad sense, comprising any engine type or architecture, comprising in said category two-stroke and four-stroke endothermic engines, both Otto cycle and Diesel cycle, as well as rotary engines (Wankel).

Moreover, the type of engine is in no manner associated with the type of vehicle on which said engine may be mounted.

As mentioned, the present invention resolves particular advantages of motor vehicles supplied by a carburetor, which are characterized by considerable restrictions in terms of polluting emissions, but it may in any case also be applied to automobiles, industrial vehicles and motor vehicles in general, engine generators, chain saws, lawnmowers and the like.

The term motorcycle means a motion cycle having at least two wheels, i.e. a front wheel and a rear wheel. Therefore, three-wheel motorcycles also fall under such a definition, such as for example, two paired and steered wheels on the front axle, and one driving wheel on the rear axle, but also the motorcycles comprising one steered wheel on the front axle and two driving wheels on the rear axle. Finally, so-called quadricycles having two wheels at the front axle and two wheels at the back axle fall under the definition of motorcycle.

The fuel supply system 4 for internal combustion engine 8 according to the present invention comprises a main supply conduit 12 provided with a throttle valve 16 of a carburetor 20 configured to provide an air/fuel mix to the engine.

It is worth noting that the term throttle valve 16 means any type of shutter device adapted to adjust the width of the conduit of the main supply conduit 12 in which it is inserted; for this purpose, both a classical throttle valve 16 formed by a revolving plate element and further devices suitable for the purpose, such as for example a guillotine valve, a sector valve, etc., may be used.

Also the concept of carburetor 20 is to be intended in the broad sense as comprising any device adapted to mix a flow of air with a flow of fuel, such as for example gasoline. Therefore, carburetor 20 may have any shape and size, may be wholly mechanical or also provide automatisms and electrical components for adjusting it.

The main supply conduit 12 is conveniently connected to the internal combustion engine 8; for example, as typically occurs in stroke engines 2, the main supply conduit 12 leads directly into a combustion chamber 24 and/or into a pump case 26 so as to supply at least one cylinder 29 of said internal combustion engine 8.

A main air filter 27 preferably is arranged in known manner on said main supply conduit 12 upstream of said throttle valve 16.

The fuel supply system 4 further comprises an additional air conduit 28 provided with a second valve 32 configured to provide an additional portion of air to the internal combustion engine 8.

In particular, the air of said additional air conduit 28 is delivered to the internal combustion engine 8. According to a possible embodiment, the air of the additional air conduit 28 may be sent into the crankcase chamber of engine 8 or may also be directly sent into the pump case 26.

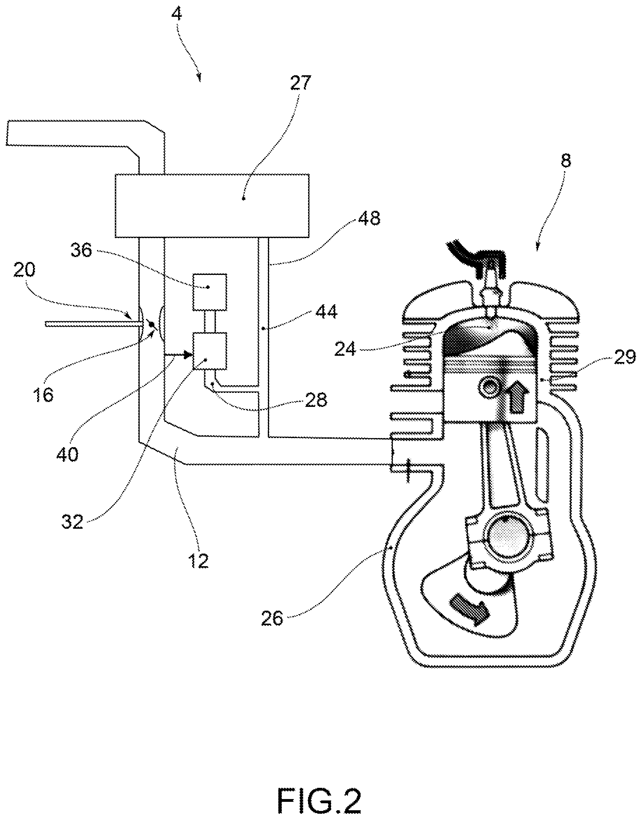

As shown in Fig. 2, the air of the additional air conduit 28 may be mixed with the air from the main supply conduit 12 downstream of the throttle valve 16 and upstream of the input to the combustion chamber 24.

For example, the additional air conduit 28 may be connected to a portion of the main supply conduit 12 arranged downstream of said throttle valve 16 so as to deliver an additional flow of air into the combustion chamber 24.

Advantageously, said second valve 32 is controlled on the basis of the pressure in the main supply conduit 12 downstream of said throttle valve 16 and/or by the position of said throttle valve 16, as better described later.

It is worth noting that the expressions "downstream" and/or "upstream" later in the description are always to be considered in reference to the natural suction flow of the air inside the internal combustion engine 8; therefore, the "upstream" side will always be on the side of the air filter or in any case on the side of the air input in the fuel supply system 4, while the "downstream" side will always be facing the side of the combustion chamber 24 and in general, on the side of the internal combustion engine 8.

The additional air conduit 28 is provided with an its own air filter 36 arranged upstream of the second valve 32; advantageously, the air filter 36 of the additional air conduit 28 is separate from the main air filter 27 of the main supply conduit 12. The two conduits do not affect each other from a fluid-dynamic viewpoint due to this separation. This allows the additional air conduit 28 to improve the operating conditions of the internal combustion engine 8, in particular in release step of the gasoline control, due to the fluid separation, upstream, between the two conduits 12, 28.

According to a possible embodiment, the second valve 32 is fluidly connected to the main supply conduit 12 through a branch conduit 40 so that the pressure into said main supply conduit 12 acts directly said second valve 32.

Preferably, for this purpose, the second valve 32 is arranged close to the throttle valve 16 and conduit 12 to minimize the losses of load through the branch conduit 40.

It is worth noting that the second valve 32 does not allow the direct exchange of air mass between the main supply conduit 12 and the additional air conduit 28.

In other words, when also provided, the branch conduit 40 does not allow a direct exchange of air mass between the main supply conduit 12 and the additional air conduit 28, rather it only serves so the depression downstream of the throttle valve 16 (in particular, under closed condition of the latter) may affect the second valve 32, through the same branch conduit 40, thus causing it to open and therefore allowing the passage of the additional flow of air.

The second valve 32 may therefore operate as vacuum valve controlled by the depression in the main supply conduit 12 and may, for example, be a membrane valve.

As seen, the throttle valve 16 and the second valve 32 may be mechanically connected to each other so as to open/close the additional air conduit 28 according to the position of the throttle valve 16.

Such a mechanical connection results in the branch conduit 40 no longer being required, which branch conduit may however remain in order to allow a dual control of the position of the second valve.

In the case of direct mechanical connection between the throttle valve 16 and the second valve 32, the operation of the latter is of mechanical type but in any case, is associated with the pressure in the main supply conduit 12 downstream of the throttle valve 16. Indeed, the physical position of the throttle valve 16 in the main supply conduit 12 establishes the corresponding pressure value downstream of the same throttle valve 16.

The fuel supply system 4 preferably is calibrated so that when the throttle valve 16 is closed, the second valve 32 is opened for admitting a flow of air such as to have a mixture of air and fuel in the combustion chamber 24 having a titre between 14.3 and 14.7.

According to a possible embodiment, the fuel supply system 4 comprises a by-pass conduit 44 branching from said additional air conduit 28.

Such a by-pass conduit 44 allows the suction of a further additional flow of air which is not subjected to the action of the second valve 32; in other words, the branch of the by-pass conduit 44 occurs downstream of the second valve 32. For this reason, the air sucked by means of the by-pass conduit 44 creates a continuous, albeit limited, flow in the combustion chamber 24 which serves to dampen the pulsations of the internal combustion engine 8.

An inlet 48 of said by-pass conduit 44 in turn may be connected to said main air filter 27 so as to receive air filtered by said main air filter 27.

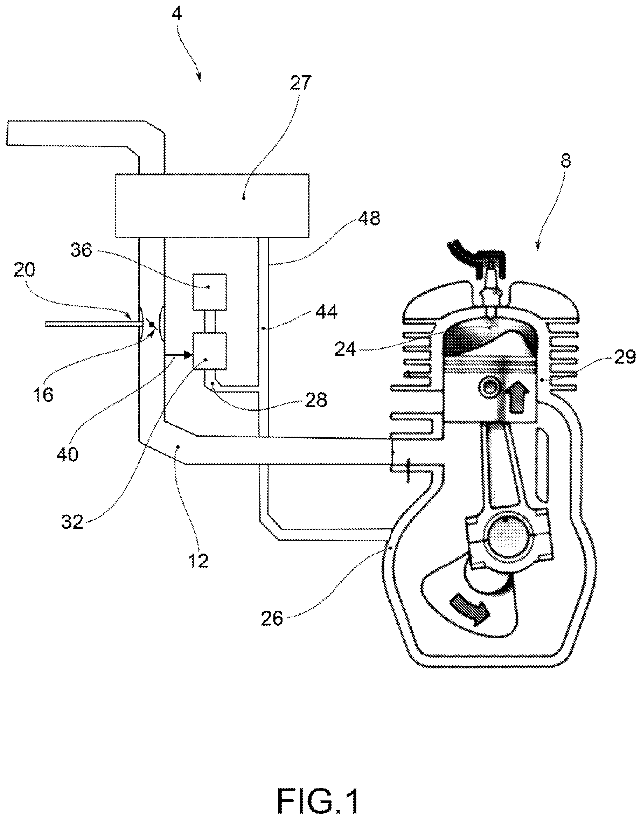

In particular, the by-pass conduit 44 connect the main air filter 27 with the main supply conduit 12 (fig.2) or in the combustion chamber 24 or in the pump case 26 (fig. 1). Since the by-pass conduit 44 is a branch of the additional air conduit 28, the by-pass conduit 44 defines a direct passage between the main air filter 27 and the main supply conduit 12 or the combustion chamber 24. Thanks to this configuration the by-pass conduit 44 allows a direct circulation of air towards the engine, conveniently calibrated, in case of malfunctioning of the second valve 32 or of the first throttle valve 16.

This allows the engine to work continuously, even though at a reduced load.

Constructively, the additional air conduit 28 defines a branch conduit which intercepts the by-pass conduit 44. The by-pass conduit 44 is therefore spaced apart from the second valve 32 which is provided along the additional air conduit 28. In this way, the by-pass conduit 44 is independent from the second valve 32. In vase of malfunctioning of one or both of said valves, the flow of air flows from the main air filter 27 directly into the by-pass conduit 44 which intercepts the main supply conduit 12 or the crank chamber so that it supplies the engine.

As may be appreciated by what is described, the present invention allows to overcome the drawbacks introduced in the known art.

In particular, due to the use of the additional air conduit 28, an adequate flow of air may be provided to the engine also during the release steps so as to allow the combustion of the sucked gases and the oil in the combustion chamber 24 or in the pump case 26 in release step of the accelerator.

The depression which is created in the combustion chamber 24 or in the pump case 26 generates a depression in the portion of the main supply conduit 12 downstream of the throttle valve 16. This depression allows the opening of the second valve 32, thus allowing the input of a flow of air into the combustion chamber 24 or into the pump case 26, although the throttle valve 16 is closed. The oxygen of the flow of air thus received is combined with the unburnt hydrocarbons in the combustion chamber 24 or in the pump case 26 and burns.

Thereby, there is a significant reduction of the polluting emissions in all the release steps of the accelerator. Thereby, the oversizing of the catalyzers (not shown) of the exhaust system and an excessive overheating thereof may also be avoided.

The additional air conduit 28 does not deliver any additional flow of air and therefore does not modify the operating conditions of the engine under standard operating conditions of the engine, i.e. in the constant gasoline and/or acceleration steps.

The by-pass conduit, when provided, instead is capable of always providing an additional flow of air to the engine, not only in the release step.

This reduced additional flow serves to adjust the operation of the carburetor according to all the operating conditions of the engine, including the boundary conditions such as the temperature and the atmospheric pressure: in other words, the additional flow of air makes the carburetor less sensitive as the boundary conditions vary and therefore makes the operation of the engine more regular.

Therefore, the present invention allows the catalyzers to always be kept fed, i.e. properly supplied, in the close-off steps of the gasoline: thereby, an efficient catalytic conversion is obtained.

Indeed, the combustion chamber remains active also in the release step of the gasoline control, given that the additional flow of air is mixed with the oil and fuel residual in the pump case when the gasoline is closed off, so long as the number of revolutions of the engine is no longer sufficient to generate such a depression as to keep open the depression (membrane) valve.

Advantageously, the operation of the second valve, for example depression valve, is automatic but of mechanical type, i.e. it is naturally managed by the operation of the engine and therefore does not require costly and complex controls of the operation/actuation thereof.

This automatism may occur according to the depression naturally created in the main supply conduit 12 following the throttling due to the throttle valve, and even more simply by means of a mechanical connection between the revolving of the throttle valve and the position of the second valve.

The result is a significant construction and adjustment simplicity.

Advantageously, the main supply conduit 12 and the additional air conduit 28 do not suck air through the same filter box, rather through two separate air supplies: in particular, the main supply conduit 12 sucks air through the main air filter while the additional air conduit sucks air through its own secondary air filter. Thereby, the supply system through the main supply conduit 12 does not suffer the pulsations of the engine.

The fuel supply system of the present invention is affordable to make and allows the operation of the carburetor to be optimized also in the release steps of the accelerator, thus significantly reducing the polluting emissions in such transistors.

## Claims

1. Fuel supply system (4) for internal combustion engine (8) comprising:
- a main supply conduit (12) provided with a throttle valve (16) of a carburetor (20) configured to provide an air/fuel mix to a combustion chamber (24) the internal combustion engine (8);
- an additional air conduit (28) provided with a second valve (32) configured to provide an additional portion of air to the internal combustion engine (8);
wherein said second valve (32) is controlled by the pressure in the main supply conduit (12) downstream said throttle valve (16) and/or by the position of said throttle valve (16),
wherein a by-pass conduit (44) branching from said additional air conduit (28) is provided, wherein an inlet (48) of said by-pass conduit (44) is connected to said main air filter (27) and an opposite end of said by-pass conduit (44) is directly connected to said main supply conduit (12) or to said combustion chamber (24).

2. Fuel supply system (4) for internal combustion engine (8) according to claim 1, wherein a main air filter (27) is arranged on said main supply conduit (12) upstream said throttle valve (16).

3. Fuel supply system (4) for internal combustion engine (8) according to any one of preceding claims, wherein the additional air conduit (28) is provided with an its own air filter (36) arranged upstream the second valve (32).

4. Fuel supply system (4) for internal combustion engine (8) according to any one of preceding claims, wherein said second valve (32) is fluidly connected to the main supply conduit (12) through a branch conduit (40) so that the pressure into said main supply conduit (12) acts directly said second valve (32).

5. Fuel supply system (4) for internal combustion engine (8) according to any one of preceding claims, wherein the air of said additional air conduit (28) is delivered into a crankcase chamber (24) of the internal combustion engine (8).

6. Fuel supply system (4) for internal combustion engine (8) according to any one of preceding claims, wherein said additional air conduit (28) is connected to a portion of the main supply conduit (12) arranged downstream said throttle valve (16) so to deliver additional mass flow into the combustion chamber (24).

7. Fuel supply system (4) for internal combustion engine (8) according to any one of preceding claims, wherein the second valve (32) is arranged in proximity of the throttle valve (16) and/or of the main supply conduit (12)..

8. Fuel supply system (4) for internal combustion engine (8) according to any one of preceding claims, wherein the second valve (32) is a vacuum valve controlled by a depression in the main supply conduit (12).

9. Fuel supply system (4) for internal combustion engine (8) according to claim 8, wherein the vacuum valve is a membrane valve which does not allow direct exchange of air mass between the main supply conduit (12) and the additional air conduit (28).

10. Fuel supply system (4) for internal combustion engine (8) according to any one of preceding claims, wherein the system is calibrated so that, when the throttle valve (16) is closed, the second valve (32) is opened for admitting a flow of air such as to have a mixture of air and fuel having a titre between 14.3 and 14.7.

11. Fuel supply system (4) for internal combustion engine (8) according to any one of preceding claims, wherein the second valve (32) is mechanically connected to the throttle valve (16) so as to open/close the additional air conduit (28) according to the position of the throttle valve (16).

12. Internal combustion engine (8) comprising a fuel supply system (4) according to any of preceding claims, said supply system feeding at least one cylinder (29) of said internal combustion engine (8).

13. Motor vehicle comprising a fuel supply system (4) according to any one of the claims from 1 to 11 and / or an internal combustion engine (8) according to claim 12.

## Patentansprüche

1. Kraftstoffversorgungssystem (4) für Verbrennungsmotoren (8), umfassend:
- einen Hauptversorgungskanal (12), der mit einer Drosselklappe (16) eines Vergasers (20) versehen ist und so ausgestaltet ist, dass er einem Verbrennungsraum (24) des Verbrennungsmotors (8) ein Luft/KraftstoffGemisch bereitstellt,
- einen zusätzlichen Luftkanal (28), der mit einer zweiten Klappe (32) versehen ist und so ausgestaltet ist, dass er dem Verbrennungsmotor (8) einen zusätzlichen Anteil an Luft bereitstellt,
wobei die zweite Klappe (32) durch den Druck in dem Hauptversorgungskanal (12) stromabwärts der Drosselklappe (16) und/oder durch die Position der Drosselklappe (16) gesteuert bzw. geregelt wird,
wobei ein Umgehungskanal (44), der sich von dem zusätzlichen Luftkanal (28) verzweigt, bereitgestellt ist, wobei ein Einlass (48) des Umgehungskanals (44) mit dem Hauptluftfilter (27) verbunden ist und ein entgegengesetztes Ende des Umgehungskanals (44) direkt mit dem Hauptversorgungskanal (12) oder mit dem Verbrennungsraum (24) verbunden ist.

2. Kraftstoffversorgungssystem (4) für Verbrennungsmotoren (8) nach Anspruch 1, wobei ein Hauptluftfilter (27) auf dem Hauptversorgungskanal (12) stromaufwärts der Drosselkappe (16) angeordnet ist.

3. Kraftstoffversorgungssystem (4) für Verbrennungsmotoren (8) nach einem der vorhergehenden Ansprüche, wobei der zusätzliche Luftkanal (28) mit einem ihm eigenes Luftfilter (36) versehen ist, das stromaufwärts der zweiten Klappe (32) angeordnet ist.

4. Kraftstoffversorgungssystem (4) für Verbrennungsmotoren (8) nach einem der vorhergehenden Ansprüche, wobei die zweite Klappe (32) derart durch einen Verzweigungskanal (40) in Fluidverbindung mit dem Hauptversorgungskanal (12) ist, dass der Druck in den Hauptversorgungskanal (12) direkt auf die zweite Klappe (32) wirkt.

5. Kraftstoffversorgungssystem (4) für Verbrennungsmotoren (8) nach einem der vorhergehenden Ansprüche, wobei die Luft des zusätzlichen Luftkanals (28) in eine Kurbelgehäusekammer (24) des Verbrennungsmotors (8) geliefert wird.

6. Kraftstoffversorgungssystem (4) für Verbrennungsmotoren (8) nach einem der vorhergehenden Ansprüche, wobei der zusätzliche Luftkanal (28) derart mit einem Abschnitt des Hauptversorgungskanals (12) verbunden ist, der stromabwärts der Drosselklappe (16) angeordnet ist, dass er eine zusätzliche Massenströmung in den Verbrennungsraum (24) liefert.

7. Kraftstoffversorgungssystem (4) für Verbrennungsmotoren (8) nach einem der vorhergehenden Ansprüche, wobei die zweite Klappe (32) in der Nähe der Drosselklappe (16) und/oder des Hauptversorgungskanals (12) angeordnet ist.

8. Kraftstoffversorgungssystem (4) für Verbrennungsmotoren (8) nach einem der vorhergehenden Ansprüche, wobei die zweite Klappe (32) eine Vakuumklappe ist, die durch einen Unterdruck in dem Hauptversorgungskanal (12) gesteuert bzw. geregelt wird.

9. Kraftstoffversorgungssystem (4) für Verbrennungsmotoren (8) nach Anspruch 8, wobei die Vakuumklappe eine Membranklappe ist, die keinen direkten Austausch von Luftmasse zwischen dem Hauptversorgungskanal (12) und dem zusätzlichen Luftkanal (28) zulässt.

10. Kraftstoffversorgungssystem (4) für Verbrennungsmotoren (8) nach einem der vorhergehenden Ansprüche, wobei das System derart kalibriert ist, dass, wenn die Drosselklappe (16) geschlossen wird, die zweite Klappe (32) geöffnet wird, um eine Strömung von Luft einzulassen, derart dass ein Gemisch von Luft und Kraftstoff vorliegt, das einen Titer von zwischen 14,3 und 14,7 aufweist.

11. Kraftstoffversorgungssystem (4) für Verbrennungsmotoren (8) nach einem der vorhergehenden Ansprüche, wobei die zweite Klappe (32) derart mechanisch mit der Drosselklappe (16) verbunden ist, dass der zusätzliche Luftkanal (28) gemäß der Position der Drosselklappe (16) geöffnet/geschlossen wird.

12. Verbrennungsmotor (8), der ein Kraftstoffversorgungsystem (4) nach einem der vorhergehenden Ansprüche umfasst, wobei das Kraftstoffversorgungssystem mindestens einen Zylinder (29) des Verbrennungsmotors (8) beschickt.

13. Kraftfahrzeug, das ein Kraftstoffversorgungssystem (4) nach einem der Ansprüche 1 bis 11 und/oder einen Verbrennungsmotor (8) nach Anspruch 12 umfasst.

## Revendications

1. Système d'alimentation en carburant (4) pour un moteur à combustion interne (8) comprenant :
- un conduit d'alimentation principal (12) pourvu d'un papillon des gaz (16) d'un carburateur (20) configuré pour fournir un mélange air/carburant à une chambre de combustion (24) le moteur à combustion interne (8) ;
- un conduit d'air supplémentaire (28) pourvu d'une seconde vanne (32) configurée pour fournir une partie d'air supplémentaire au moteur à combustion interne (8) ;
dans lequel ladite seconde vanne (32) est commandée par la pression dans le conduit d'alimentation principal (12) en aval dudit papillon des gaz (16) et/ou par la position dudit papillon des gaz (16),
dans lequel un conduit de dérivation (44) s'embranchant à partir dudit conduit d'air supplémentaire (28) est prévu, dans lequel une entrée (48) dudit conduit de dérivation (44) est reliée audit filtre à air principal (27) et une extrémité opposée dudit conduit de dérivation (44) est reliée directement audit conduit d'alimentation principal (12) ou à ladite chambre de combustion (24).

2. Système d'alimentation en carburant (4) pour un moteur à combustion interne (8) selon la revendication 1, dans lequel un filtre à air principal (27) est agencé sur ledit conduit d'alimentation principal (12) en amont dudit papillon des gaz (16).

3. Système d'alimentation en carburant (4) pour un moteur à combustion interne (8) selon l'une quelconque des revendications précédentes, dans lequel le conduit d'air supplémentaire (28) est pourvu d'un son propre filtre à air (36) agencé en amont de la seconde vanne (32).

4. Système d'alimentation en carburant (4) pour un moteur à combustion interne (8) selon l'une quelconque des revendications précédentes, dans lequel ladite seconde vanne (32) est reliée de manière fluidique au conduit d'alimentation principal (12) par l'intermédiaire d'un conduit d'embranchement (40) de façon à ce que la pression dans ledit conduit d'alimentation principal (12) agisse directement ladite seconde vanne (32).

5. Système d'alimentation en carburant (4) pour un moteur à combustion interne (8) selon l'une quelconque des revendications précédentes, dans lequel l'air dudit conduit d'air supplémentaire (28) est distribué dans une chambre de carter (24) du moteur à combustion interne (8).

6. Système d'alimentation en carburant (4) pour un moteur à combustion interne (8) selon l'une quelconque des revendications précédentes, dans lequel ledit conduit d'air supplémentaire (28) est relié à une partie du conduit d'alimentation principal (12) agencé en aval dudit papillon des gaz (16) de façon à distribuer un débit massique supplémentaire dans la chambre de combustion (24).

7. Système d'alimentation en carburant (4) pour un moteur à combustion interne (8) selon l'une quelconque des revendications précédentes, dans lequel la seconde vanne (32) est agencée à proximité du papillon des gaz (16) et/ou du conduit d'alimentation principal (12).

8. Système d'alimentation en carburant (4) pour un moteur à combustion interne (8) selon l'une quelconque des revendications précédentes, dans lequel la seconde vanne (32) est une vanne de dépression commandée par une dépression dans le conduit d'alimentation principal (12).

9. Système d'alimentation en carburant (4) pour un moteur à combustion interne (8) selon la revendication 8, dans lequel la vanne de dépression est une vanne à membrane qui ne permet pas un échange direct de masse d'air entre le conduit d'alimentation principal (12) et le conduit d'air supplémentaire (28).

10. Système d'alimentation en carburant (4) pour un moteur à combustion interne (8) selon l'une quelconque des revendications précédentes, dans lequel le système est étalonné de façon à ce que, lorsque le papillon des gaz (16) est fermé, la seconde vanne (32) soit ouverte pour admettre un écoulement d'air de manière à avoir un mélange d'air et de carburant ayant un ratio entre 14,3 et 14,7.

11. Système d'alimentation en carburant (4) pour un moteur à combustion interne (8) selon l'une quelconque des revendications précédentes, dans lequel la seconde vanne (32) est reliée mécaniquement au papillon des gaz (16) de façon à ouvrir/fermer le conduit d'air supplémentaire (28) selon la position du papillon des gaz (16).

12. Moteur à combustion interne (8) comprenant un système d'alimentation en carburant (4) selon l'une quelconque des revendications précédentes, ledit système d'alimentation approvisionnant au moins un cylindre (29) dudit moteur à combustion interne (8).

13. Véhicule à moteur comprenant un système d'alimentation en carburant (4) selon l'une quelconque des revendications 1 à 11 et/ou un moteur à combustion interne (8) selon la revendication 12.
